# EUROPEAN PATENT APPLICATION

(11) **EP 4 663 969 A2**
(43) Date of publication of application: **17.12.2025**
(21) Application number: 25203667.8
(22) Date of filing: 08.10.2020
(51) Int. Cl.: F16D 55/228

(54) **VEHICULAR DISC BRAKE**

(30) Priority: 11.10.2019 JP 2019187275; 11.10.2019 JP 2019187276
(62) Divisional of application: 20874115.7
(71) Applicant: Astemo, Ltd., Chiyoda-ku, Tokyo 1000004 (JP)
(72) Inventor: HATAKOSHI, Genichi, Hitachinaka-shi, Ibaraki, 3128503 (JP); WATANABE, Hiroaki, Hitachinaka-shi, Ibaraki, 3128503 (JP); KAWATA, Shunsuke, Hitachinaka-shi, Ibaraki, 3128503 (JP)
(74) Representative: Hoefer & Partner Patentanwälte mbB

(57) **Abstract**

A vehicular disc brake capable of satisfactorily releasing, to the outside air, brake heat which is generated by sliding contact between a lining and a disc rotor, while securing a lining thickness and maintaining a good brake feeling. A vehicular disc brake 1 is provided with: a caliper body 3 formed by connecting a pair of action parts 3a, 3b, which are disposed to face each other with a disc rotor 2 therebetween and have cylinder holes 3i, with a bridge part 3c striding an outer periphery of the disc rotor 2 and having a first ceiling opening 3g and a second ceiling opening 3h; and an inner friction pad 4 disposed on a vehicle inner side and an outer friction pad 5 disposed on a vehicle outer side to hold the disc rotor 2 therebetween. The inner friction pad 4 and the outer friction pad 5 are formed by attaching linings 4a, 5a to metal back plates 4b, 5b, respectively, and the back plates 4b, 5b are provided with heat dissipation pieces 4c, 4d, 5c, 5d that project outward in a disc radial direction and are inserted into the first ceiling opening 3g and the second ceiling opening 3h.

## Description

### Technical Field

The present invention relates to a vehicular disc brake, and more particularly to a vehicular disc brake having a structure for dissipating brake heat to the outside air.

### Background Art

In the related art, in vehicular disc brakes, in order to prevent temperature of a hydraulic fluid from rising due to brake heat generated by sliding contact between a lining of a friction pad and a disc rotor during braking, a case has been provided in which a middle plate is disposed between a back plate and the lining and the brake heat is released through a minute gap formed in an overlapping part between the back plate and the middle plate (see, for example, PTL 1), and a case has been provided in which an insulator having a heat insulating effect is disposed between a back plate and a shim plate to prevent brake heat from being transmitted to a piston (see, for example, PTL 2) .

In vehicular disc brakes including a split type caliper body in which caliper halves formed by splitting a bridge part striding an outer periphery of a disc rotor into two parts are connected with fastening bolts, cases have been provided in which a spacer formed with ventilation holes is interposed on a split surface of the caliper halves formed by splitting the bridge part into two parts, a stream is supplied to a sliding contact portion between a disc rotor and a friction pad through the ventilation holes, and brake heat generated by sliding contact between the disc rotor and the friction pad is released to the outside air to prevent temperature of a hydraulic fluid from rising (see, for example, PTLs 3 and 4).

### Citation list

### Patent Literature

PTL 1: JP-UM-A-5-94541
PTL 2: Japanese Patent No. 4250117
PTL 3: JP-UM-B-6-50668
PTL 4: Japanese Patent No. 4318575

### Summary of Invention

### Technical Problem

In recent years, as brake energy increases with improvement of vehicle performance, the lining of the friction pad tends to be thickened. However, in the above-described PTL 1, since the middle plate is attached to the back plate, it is difficult to increase the thickness of the lining due to the thickness of the back plate and the middle plate. In PTL 2, since the insulator and the shim plate are formed of thin plates, it is easy to secure the thickness of the lining. However, since the insulator or the shim plate is interposed between the piston and the back plate, the brake feeling may deteriorate.

In the above-described PTL 3, as the number of components increases, the weight of the caliper body may increase. Further, in PTL 4, the stream passing through a ventilation space formed between the back plate of the friction pad and the attached piston may not be capable of escaping from the bridge part of the caliper body to the outside.

Thus, an object of the invention is to provide a vehicular disc brake capable of securing the thickness of a lining and maintaining a good brake feeling while satisfactorily releasing brake heat generated by sliding contact between the lining and a disc rotor to outside air. Further, for vehicular disc brakes including a split type caliper body, an object of the invention is to reduce the weight of the caliper body while supplying a stream to a ventilation space formed between a back plate of a friction pad and an attached piston and releasing the brake heat generated by sliding contact between the disc rotor and the friction pad to the outside air.

This object is solved by the features of the independent claim. The dependent claims contain advantageous embodiments of the present invention. Solution to Problem

In order to achieve the above-described objects, the vehicular disc brake according to the invention includes: a caliper body formed by connecting a pair of action parts, which face each other with a disc rotor sandwiched therebetween and have a cylinder hole for accommodating a piston, with a bridge part having a ceiling opening and straddling an outer periphery of the disc rotor; and an inner friction pad disposed on an inner side of a vehicle body and an outer friction pad disposed on an outer side of the vehicle body with the disc rotor sandwiched therebetween. The inner friction pad and the outer friction pad are each formed by attaching a lining to a metal back plate. The back plate is provided with a heat dissipation piece that is inserted into the ceiling opening.

Further, it is preferable that the heat dissipation piece of the inner friction pad is formed in a length such that an outer side surface in a disc radial direction is disposed in the ceiling opening and contracts inward from an outer side surface of the bridge part in the disc radial direction.

Further, it is preferable that the heat dissipation piece of the outer friction pad is formed in a length such that an outer side surface in a disc radial direction projects outward from the ceiling opening in the disc radial direction.

Further, it is preferable that a plurality of the ceiling openings are formed in the bridge part in a disc circumferential direction, and a plurality of the heat dissipation pieces are formed according to the ceiling openings.

Further, it is preferable that an outer side surface of the heat dissipation piece in a disc radial direction is formed, in a state in which the inner friction pad and the outer friction pad are assembled to the caliper body, in a shape along a shape of an outer side surface of the bridge part in the disc radial direction.

Further, it is preferable that the heat dissipation piece is formed with a chamfered part.

Further, it is preferable that the pair of action parts are formed with a plurality of the cylinder holes in a disc circumferential direction, the bridge part includes a disc inward rotation side bridge part formed on a disc inward rotation side when a vehicle moves forward, a disc outward rotation side bridge part formed on a disc outward rotation side when the vehicle moves forward, and an intermediate bridge part formed between the disc inward rotation side bridge part and the disc outward rotation side bridge part, and the ceiling openings are formed between the intermediate bridge part and the disc inward rotation side bridge part, and between the intermediate bridge part and the disc outward rotation side bridge part, and ventilation holes that open to an outer side surface in a disc radial direction and a disc rotor side surface of at least one of the action parts on an extension line of the intermediate bridge part are formed.

Further, it is preferable that a ventilation space is formed among the piston accommodated in each of the attached cylinder holes, the back plate, and the disc rotor side surface of the action part, and the ventilation holes communicate with the ventilation space.

Further, it is preferable that a ventilation groove extending from an inner side end part in the disc radial direction to the ventilation holes is formed on the disc rotor side surface of the action part.

It is preferable that the ventilation holes are formed at an obtuse angle with respect to the disc rotor side surface from the outer side surface of the action part in the disc radial direction toward the disc rotor side surface.

It is preferable that each of the ventilation holes is formed in a respective one of the pair of action parts.

It is preferable that the ventilation holes formed in the action parts disposed on the inner side of the vehicle body have a larger diameter than the ventilation holes formed in the action parts disposed on the outer side of the vehicle body.

It is preferable that the caliper body is attached to the vehicle body with an inner side in the disc radial direction facing the front of the vehicle body.

### Advantageous Effect

According to the vehicular disc brake in the invention, since the heat dissipation piece formed on the back plate comes into contact with the outside air through the ceiling opening, the brake heat can be satisfactorily released to the outside air. By forming the heat dissipation piece, the volume of the back plate can be increased without increasing the thickness of the back plate as compared with related-art friction pads not including heat dissipation piece, and the heat capacity for absorbing the brake heat can be secured.

By forming the heat dissipation piece of the inner friction pad in the length such that the outer side surface in the disc radial direction is disposed in the ceiling opening, when the caliper body to which the friction pad is assembled is attached to the vehicle body, there is no possibility that the heat dissipation piece of the inner friction pad interferes with members on the vehicle body side such as the wheel.

Further, by forming the heat dissipation piece of the outer friction pad in the length such that the outer side surface in the disc radial direction projects outward from the ceiling opening in the disc radial direction, the surface area of the heat dissipation piece can be increased to improve the heat dissipating property. The volume of the back plate can be further increased without increasing the thickness of the back plate, and the heat capacity for absorbing the brake heat can be secured.

By forming a plurality of the ceiling openings in the bridge part in the disc circumferential direction and forming a plurality of the heat dissipation pieces according to the ceiling openings, the heat dissipating property can be further improved. Further, the volume of the back plate can be satisfactorily increased without increasing the thickness of the back plate, and the heat capacity for absorbing the brake heat can be secured.

By forming the outer side surface of the heat dissipation piece in the disc radial direction, in the state in which the inner friction pad and the outer friction pad are assembled to the caliper body, in the shape along the shape of the outer side surface of the bridge part in the disc radial direction, it is possible to improve the heat dissipating property while maintaining the good detachability of the friction pad, and it is possible to attain a neat appearance in the state in which the friction pads are assembled to the caliper body.

Further, by forming the chamfered part on the heat dissipation piece, the surface area of the heat dissipation piece can be increased to improve the heat dissipating property, and the assembling property of the friction pad can be improved.

The pair of action parts include a plurality of cylinder holes in the disc circumferential direction. The bridge part includes the disc inward rotation side bridge part, the disc outward rotation side bridge part, and the intermediate bridge part. The ceiling openings are formed between the intermediate bridge part and the disc inward rotation side bridge part, and between the intermediate bridge part and the disc outward rotation side bridge part. The ventilation holes that open to the outer side surface in the disc radial direction and the disc rotor side surface of at least one of the action parts on the extension line of the intermediate bridge part are formed. Accordingly, regardless of the structure type of the caliper body, such as a split type caliper body or a monocoque caliper body, the ventilation holes allow the outside air to be introduced to cool the disc brake. Further, the brake heat can be released to the outside air through the ventilation holes, and the temperature of the hydraulic fluid can be prevented from rising. The stress applied during braking is lower around the action parts located on the extension line of the intermediate bridge part as compared with other portions. Therefore, the rigidity of the caliper body can be secured even though the ventilation holes are formed on the extension line of the intermediate bridge part of the action part, and the weight of the caliper body can be further reduced.

Further, by communicating the ventilation space formed among the attached piston, the back plate of the inner friction pad or the back plate of the outer friction pad, and the disc rotor side surface of the action part, to the ventilation holes, the stream can be introduced into the ventilation space to satisfactorily cool the ventilation space, and the brake heat of the ventilation space can be satisfactorily released to the outside air through the ventilation holes.

By forming the ventilation grooves extending from the inner side end part in the disc radial direction to the ventilation holes on the disc rotor side surfaces of the action parts, the stream can be satisfactorily introduced into the ventilation space through the ventilation grooves and the ventilation holes, and the brake heat can be satisfactorily released to the outside air.

By forming the ventilation holes at the obtuse angle with respect to the disc rotor side surface toward the disc rotor side surface from the outer side surface of the action part in the disc radial direction, the flow of the outside air introduced into the ventilation space and the flow of the brake heat for releasing the brake heat to the outside air can be improved.

Further, by forming each of the ventilation holes in a respective one of the pair of action parts, the outside air can be introduced into a portion where the friction pad and the disc rotor are in sliding contact with each other to more reliably perform cooling, and the brake heat can be more reliably released to the outside air through the ventilation holes.

By forming the ventilation holes formed in the action parts disposed on the inner side of the vehicle body to have a larger diameter than the ventilation holes formed in the action parts disposed on the outer side of the vehicle body, the outside air can be satisfactorily introduced into the ventilation space that is formed between the back plate of the friction pad on the inner side of the vehicle body and the attached piston and where the brake heat is likely to be trapped, and the trapped brake heat can be satisfactorily released to the outside air.

Moreover, by attaching the caliper body to the vehicle body with the inner side in the disc radial direction facing the front of the vehicle, it is possible to more effectively supply the stream to the ventilation spaces.

### Brief Description of Drawings

[FIG. 1] FIG. 1 is a front view of a vehicular disc brake illustrating an embodiment of the invention.
[FIG. 2] FIG. 2 is a plan view of the same vehicular disc brake.
[FIG. 3] FIG. 3 is a bottom view of the same vehicular disc brake.
[FIG. 4] FIG. 4 is a side view of the same vehicular disc brake.
[FIG. 5] FIG. 5 is a cross-sectional view taken along a line V-V in FIG. 4.
[FIG. 6] FIG. 6 is a cross-sectional view taken along a line VI-VI in FIG. 4.
[FIG. 7] FIG. 7 is a cross-sectional view taken along a line VII-VII in FIG. 1.
[FIG. 8] FIG. 8 is a cross-sectional view taken along a line VIII-VIII in FIG. 1.

### Description of Embodiments

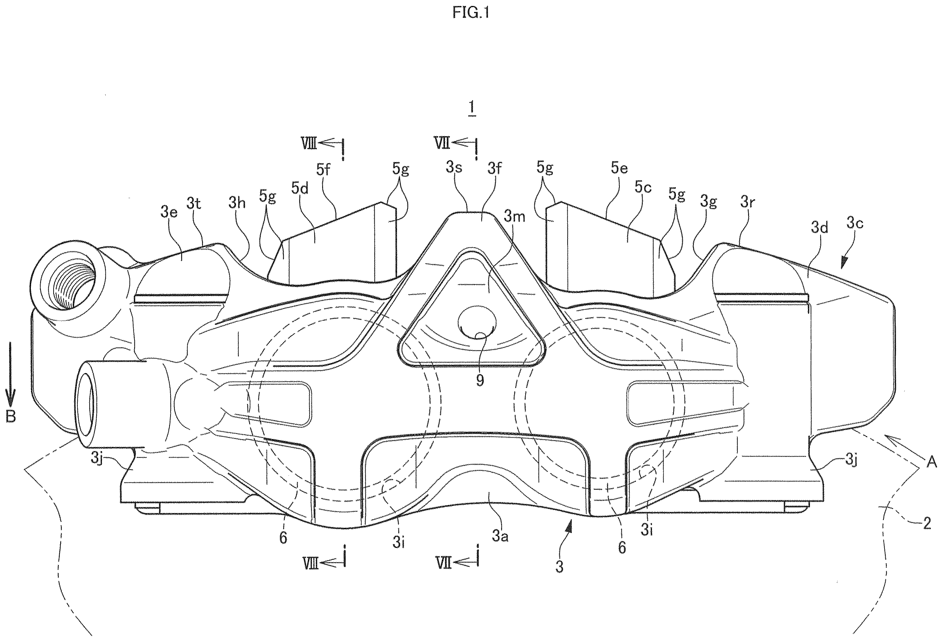

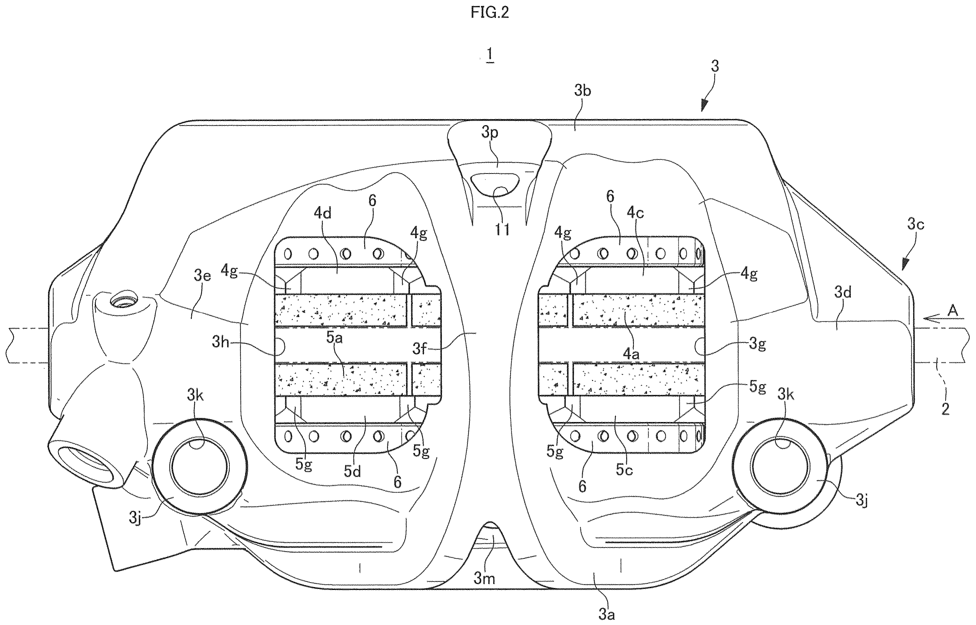

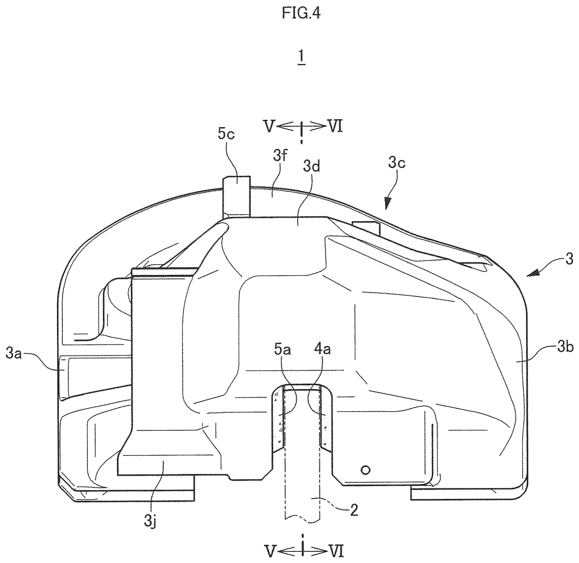

FIGS. 1 to 8 are views illustrating an embodiment of a vehicular disc brake of the invention. An arrow A indicates a rotation direction of a disc rotor that rotates together with a wheel when a vehicle moves forward, and a disc outward rotation side and a disc inward rotation side described below are assumed to be sides when the vehicle moves forward. Further, an arrow B indicates the front of the vehicle.

A vehicular disc brake 1 according to the present embodiment includes a disc rotor 2 that rotates together with a wheel, a monocoque structure piston-opposed type caliper body 3 attached to a vehicle body on one side of the disc rotor 2, and an inner friction pad 4 and an outer friction pad 5 that face each other with the disc rotor 2 sandwiched between the inner friction pad 4 and the outer friction pad 5 between action parts 3a and 3b of the caliper body 3 provided on both sides of the disc rotor 2.

The caliper body 3 integrally includes a pair of action parts 3a and 3b and a bridge part 3c striding the pair of action parts 3a and 3b on a disc outer periphery side. The bridge part 3c includes a disc inward rotation side bridge part 3d, a disc outward rotation side bridge part 3e, and an intermediate bridge part 3f disposed between the disc inward rotation side bridge part 3d and the disc outward rotation side bridge part 3e. A first ceiling opening 3g is formed between the disc inward rotation side bridge part 3d and the intermediate bridge part 3f, and a second ceiling opening 3h is formed between the disc outward rotation side bridge part 3e and the intermediate bridge part 3f. Each of the action parts 3a and 3b is formed with two cylinder holes 3i facing each other for accommodating pistons 6, and between each of the pistons 6 and a respective one of the cylinder holes 3i, a hydraulic chamber 7 is defined.

On both sides of the one action part 3a disposed on the outer side of the vehicle in a disc circumferential direction, mounting boss parts 3j and 3j in a disc radial direction are formed. In each mounting boss part 3j, a mounting bolt insertion hole 3k in the disc radial direction is formed. The caliper body 3 is attached to the vehicle body by screwing a mounting bolt (not shown) inserted into the mounting bolt insertion hole 3k into a caliper mounting part provided on a vehicle body side.

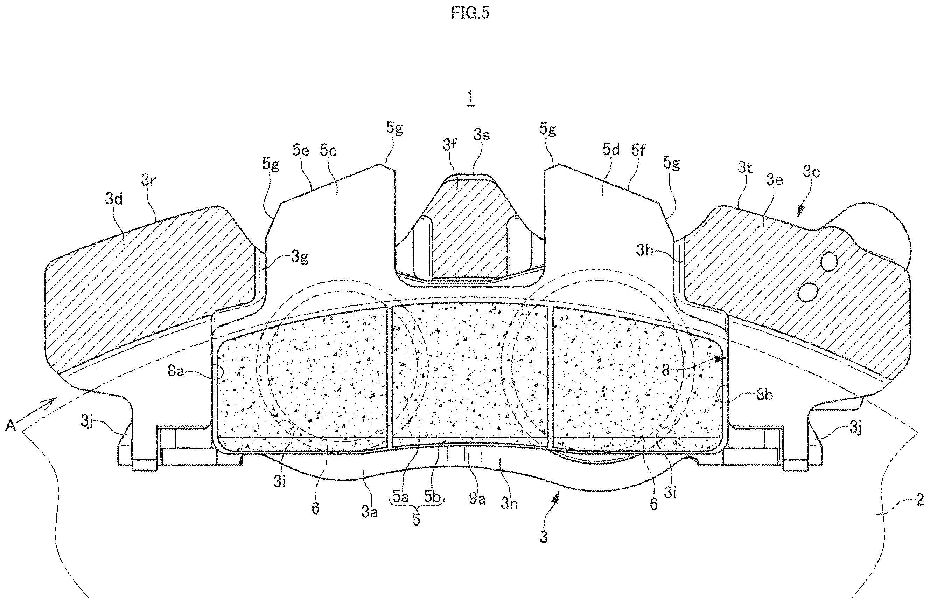

The one action part 3a is provided with, as illustrated in FIG. 5, a friction pad accommodating part 8 for accommodating the outer friction pad 5. The friction pad accommodating part 8 includes an inward rotation side torque receiving surface 8a formed on a disc inward rotation side with respect to the first ceiling opening 3g and at the inner side of the caliper body with respect to the first ceiling opening 3g, an outward rotation side torque receiving surface 8b formed on a disc outward rotation side with respect to the second ceiling opening 3h and at the inner side of the caliper body with respect to the second ceiling opening 3h, and a pad support member (not shown) separated from the caliper body 3 that supports an inner side surface of the outer friction pad 5 in the disc radial direction.

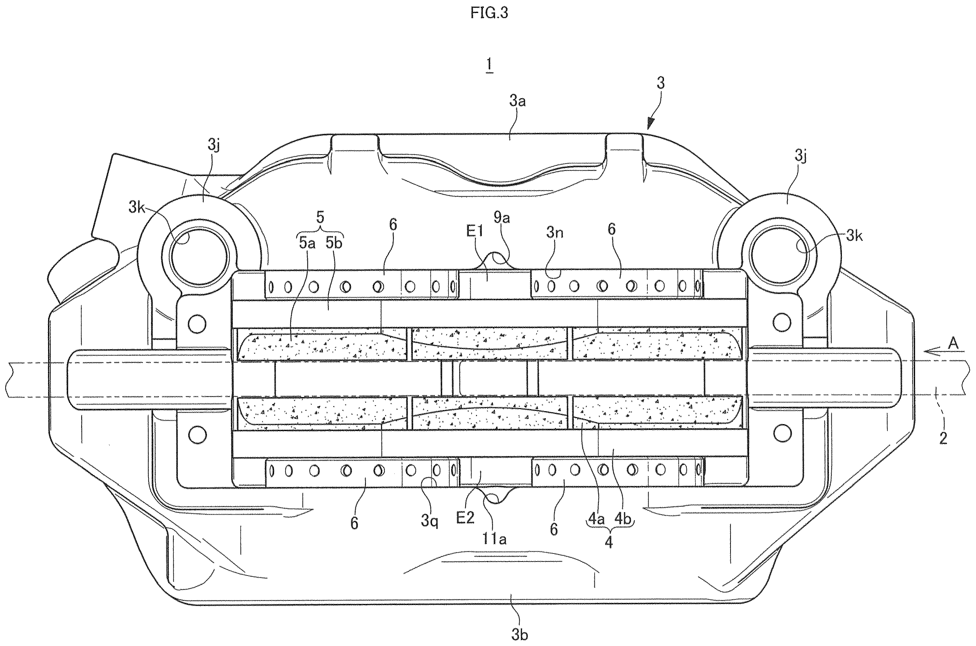

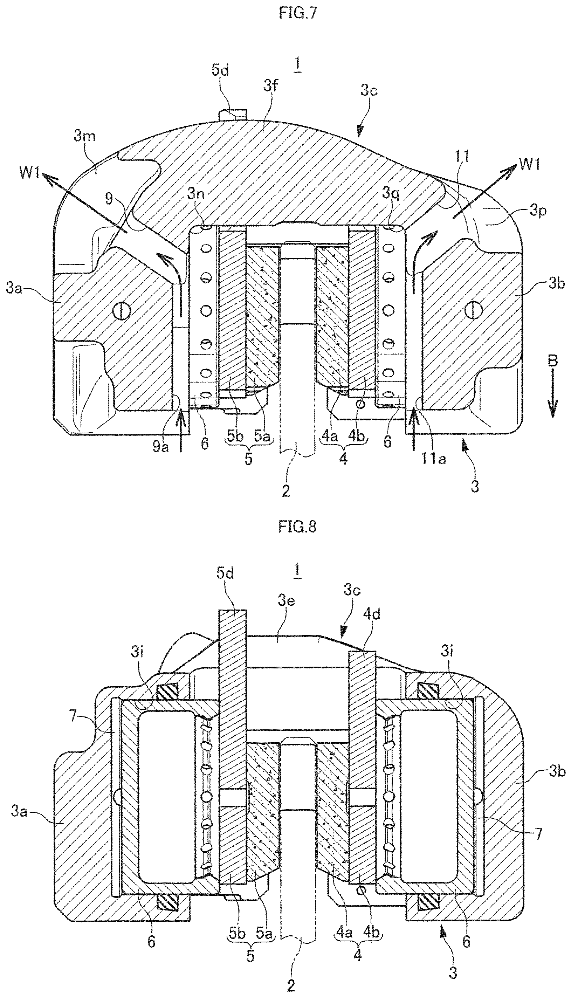

As illustrated in FIGS. 7 and 3, on the one action part 3a, a first ventilation hole 9 that opens to an outer side surface 3m in the disc radial direction located on the extension line of the intermediate bridge part 3f and a disc rotor side surface 3n is formed, and the first ventilation hole 9 is formed at an obtuse angle with respect to the side surface of the disc rotor 2. Further, on the disc rotor side surface 3n of the one action part 3a, a first ventilation groove 9a extending from the inner side end part in the disc radial direction at the intermediate position between the cylinder holes 3i and 3i to the first ventilation hole 9 is formed. Through the first ventilation groove 9a and the first ventilation hole 9, a stream W1 is supplied to a ventilation space E1 formed among a back plate 5b of the outer friction pad 5, the attached pistons 6 and 6, and the disc rotor side surface 3n while the brake heat is released to the outside air.

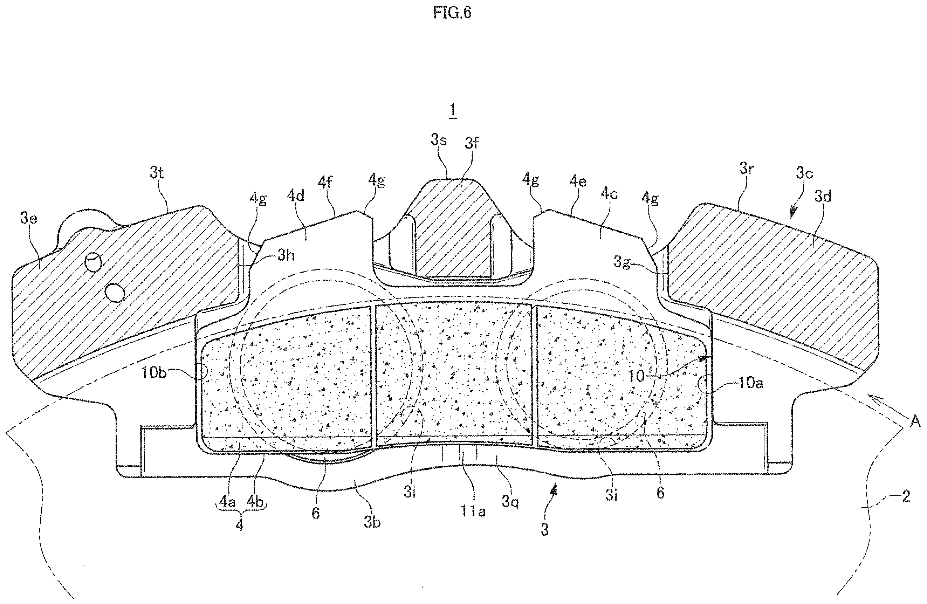

The other action part 3b disposed on a vehicle inner side is provided with, as illustrated in FIG. 6, a friction pad accommodating part 10 that accommodates the inner friction pad 4. The friction pad accommodating part 10 includes, similar to the friction pad accommodating part 8 formed in the one action part 3a, an inward rotation side torque receiving surface 10a formed on the disc inward rotation side with respect to the first ceiling opening 3g and at the inner side of the caliper body with respect to the first ceiling opening 3g, an outward rotation side torque receiving surface 10b formed on the disc outward rotation side with respect to the second ceiling opening 3h and at the inner side of the caliper body with respect to the second ceiling opening 3h, and a pad support member (not shown) separated from the caliper body 3 that supports an inner side surface of the inner friction pad 4 in the disc radial direction.

As illustrated in FIGS. 7 and 3, on the other action part 3b, a second ventilation hole 11 having a diameter larger than that of the first ventilation hole 9 is opened to an outer side surface 3p in the disc radial direction located on the extension line of the intermediate bridge part 3f and a disc rotor side surface 3q, and the first ventilation hole 11 is formed at an obtuse angle with respect to the side surface of the disc rotor 2. Further, on the disc rotor side surface 3q of the other action part 3b, a second ventilation groove 11a extending from the inner side end part in the disc radial direction at the intermediate position between the cylinder holes 3i and 3i to the second ventilation hole 11 is formed. Through the second ventilation groove 11a and the second ventilation hole 11, the stream W1 is supplied to a ventilation space E2 formed among a back plate 4b of the inner friction pad 4, the attached pistons 6 and 6, and the disc rotor side surface 3q while the brake heat is released to the outside air. Moreover, an outer side surface 3r of the disc inward rotation side bridge part 3d in the disc radial direction, an outer side surface 3s of the intermediate bridge part 3f in the disc radial direction, and an outer side surface 3t of the disc outward rotation side bridge part 3e in the disc radial direction are gradually inclined inward in the disc radial direction from an extension line of a sliding contact surface between the inner friction pad 4 and the disc rotor 2 to the other action part side which is the inner side of the vehicle body.

The inner friction pad 4 and the outer friction pad 5 are formed of linings 4a and 5a that are in sliding contact with the side surface of the disc rotor 2 and the metal back plates 4b and 5b to which the linings 4a and 5a are attached or sintered. On the outer side of the back plates 4b and 5b in the disc radial direction, a pair of heat dissipation pieces 4c and 4d and a pair of heat dissipation pieces 5c and 5d that project outward in the disc radial direction and that are inserted in the first ceiling opening 3g and the second ceiling opening 3h are each integrally projected.

As illustrated in FIG. 6, the heat dissipation piece 4c on the disc inward rotation side of the inner friction pad 4 is formed, in a state in which the inner friction pad 4 is assembled to the caliper body 3, in a length such that the outer side surface 4e in the disc radial direction is disposed in the first ceiling opening 3g and contracts inward from the outer side surfaces 3r and 3s on the other action part side in the disc radial direction. The shape of the outer side surface 4e in the disc radial direction is formed along the shapes of the outer side surfaces 3r and 3s on the other action part side in the disc radial direction, and is gradually inclined inward in the disc radial direction from the outward rotation side to the inward rotation side. The heat dissipation piece 4d on the disc outward rotation side of the inner friction pad 4 is formed, in a state in which the inner friction pad 4 is assembled to the caliper body 3, in a length such that the outer side surface 4f in the disc radial direction is disposed in the second ceiling opening 3h and contracts inward from the outer side surfaces 3s and 3t on the other action part side in the disc radial direction. The shape of the outer side surface 4f in the disc radial direction is formed along the shapes of the outer side surfaces 3s and 3t on the other action part side in the disc radial direction, and is gradually inclined inward in the disc radial direction from the inward rotation side to the outward rotation side. Both the heat dissipation pieces 4c and 4d are formed with chamfered parts 4g on a corner on the disc inward rotation side, a corner on the disc outward rotation side, a disc inward rotation side surface, and a disc outward rotation side surface.

As illustrated in FIGS. 1 and 5, the heat dissipation piece 5c on the disc inward rotation side of the outer friction pad 5 is formed, in a state in which the outer friction pad 5 is assembled to the caliper body 3, in a length such that the outer side surface 5e in the disc radial direction is disposed in the first ceiling opening 3g and projects outward in the disc radial direction. The shape of the outer side surface 5e in the disc radial direction is formed along the shapes of the outer side surfaces 3r and 3s on the one action part side in the disc radial direction, and is gradually inclined inward in the disc radial direction from the outward rotation side to the inward rotation side. The heat dissipation piece 5d on the disc outward rotation side of the outer friction pad 5 is formed in a length such that the outer side surface 5f in the disc radial direction is disposed in the second ceiling opening 3h and projects outward in the disc radial direction. The shape of the outer side surface 5f in the disc radial direction is formed along the shapes of the outer side surfaces 3s and 3t on the one action part side in the disc radial direction, and is gradually inclined inward in the disc radial direction from the inward rotation side to the outward rotation side. Both the heat dissipation pieces 5c and 5d are formed with chamfered parts 5g on a corner on the disc inward rotation side, a corner on the disc outward rotation side, a disc inward rotation side surface, and a disc outward rotation side surface.

The vehicular disc brake 1 according to the present embodiment is formed as described above, so that the heat dissipation pieces 4c, 4d, 5c, and 5d formed on the inner friction pad 4 and the outer friction pad 5 come into contact with the outside air through the first ceiling opening 3g and the second ceiling opening 3h. Therefore, the brake heat generated by sliding contact of the inner friction pad 4 and the outer friction pad 5 with the disc rotor 2 during braking can be satisfactorily released to the outside air. The volume of the back plates 4b and 5b can be increased without increasing the thickness of the back plates 4b and 5b, and the heat capacity for absorbing the brake heat can be secured. Further, by forming the heat dissipation pieces 4c and 4d of the inner friction pad 4 in a length such that the outer side surfaces 4e and 4f in the disc radial direction are disposed in the first ceiling opening 3g or in the second ceiling opening 3h and contract inward from the outer side surface 3r, 3s, and 3t on the other action part side in the disc radial direction, when the caliper body 3 to which the inner friction pad 4 and the outer friction pad 5 are assembled is attached to the vehicle body, there is no possibility that the heat dissipation pieces 4c and 4d of the inner friction pad 4 interfere with the members on the vehicle body side such as the wheel. Further, the heat dissipation pieces 5c and 5d of the outer friction pad 5 are formed in a length such that the outer side surfaces 5e and 5f in the disc radial direction are disposed in the first ceiling opening 3g or in the second ceiling opening 3h and project outward in the disc radial direction. Therefore, the surface areas of the heat dissipation pieces 5c and 5d can be increased to improve the heat dissipating property, and the heat capacity for absorbing the brake heat can be satisfactorily secured.

By forming the outer side surfaces 4e, 4f, 5e, and 5f of the heat dissipation pieces 4c, 4d, 5c, and 5d in the disc radial direction, in a state in which the inner friction pad 4 and the outer friction pad 5 are assembled, in shapes along the shapes of the outer side surfaces 3r, 3s, and 3t of the disc inward rotation side bridge part 3d, and the intermediate bridge part 3f, and the disc outward rotation side bridge part 3e in the disc radial direction, it is possible to improve the heat dissipating property while maintaining a good detachability of the inner friction pad 4 and the outer friction pad 5 to the caliper body 3. Further, in a state in which the inner friction pad 4 and the outer friction pad 5 are assembled to the caliper body 3, it is possible to obtain a neat appearance. By forming a plurality of the chamfered parts 4g and 5g on the heat dissipation pieces 4c, 4d, 5c, and 5d, the surface areas of the heat dissipation pieces 4c, 4d, 5c, and 5d can be increased to improve the heat dissipating property, and the assembling property of the friction pad can be improved.

Further, through the first ventilation groove 9a and the first ventilation hole 9 that are formed in the one action part 3a, and the second ventilation groove 11a and the second ventilation hole 11 that are formed in the other action part 3b, the stream W1 is supplied to the ventilation space E1 formed among the back plate 4b of the inner friction pad 4, the attached pistons 6 and 6, and the disc rotor side surface 3q and the ventilation space E2 formed among the back plate 5b of the outer friction pad 5, the attached pistons 6 and 6, and the disc rotor side surface 3n. The brake heat can be released to the outside air through the first ventilation groove 9a and the first ventilation hole 9 as well as the second ventilation groove 11a and the second ventilation hole 11, and the temperature of the hydraulic fluid can be prevented from rising. A stress applied during braking is lower around the action parts 3a and 3b located on the extension line of the intermediate bridge part 3f as compared with other portions. Therefore, rigidity of the caliper body 3 can be secured even though the first ventilation hole 9 and the second ventilation hole 11 are formed, and the weight of the caliper body 3 can be further reduced.

The first ventilation hole 9 and the second ventilation hole 11 are formed at an obtuse angle with respect to the side surface of the disc rotor 2, and thus the flow of the stream W1 introduced into the ventilation space E1 and the ventilation space E2 and the flow of the brake heat for releasing the brake heat to the outside air can be improved. Further, by forming the second ventilation hole 11 formed in the other action part 3b disposed on the inner side of the vehicle body to have a larger diameter than the first ventilation hole 9 formed in the one action part 3a disposed on the outer side of the vehicle body, the stream W1 can be satisfactorily introduced into the ventilation space E2 where the brake heat is likely to be trapped, and the trapped brake heat can be satisfactorily released to the outside air. Further, by attaching the caliper body 3 to the vehicle body with the inner side in the disc radial direction facing the front of the vehicle body, it is possible to more effectively supply the stream W1 to the ventilation spaces E1 and E2.

The invention is not limited to the above-described embodiment, and the length of the heat dissipation piece is any length depending on the vehicle body on which the disc brake is mounted. The number of the ceiling openings formed in the caliper body is any number, and the heat dissipation piece may be appropriately formed according to the number of the ceiling openings. Further, it is not necessary to form the outer side surface of the heat dissipation piece in the disc radial direction, in the state in which the inner friction pad and the outer friction pad are assembled to the caliper body, in the shape along the shape of the outer side surface of the bridge part in the disc radial direction, and it is not necessary to form the chamfered part on the heat dissipation piece.

It is also possible to form the ventilation holes only in one of the action parts, and the ventilation holes may be formed alone without forming the ventilation grooves. The diameter of the ventilation holes may be appropriately determined according to the position where the caliper body is attached to the vehicle body, and the diameter of the ventilation holes on the outer side of the vehicle body is not limited to the diameter larger than the diameter of the ventilation holes on the inner side of the vehicle body. Further, the invention can be applied not only to the disc brake using the monocoque structure piston-opposed type caliper body but also to the vehicular disc brake using the split type caliper body.
The present invention is also described by the following clauses:

### [Clause 1]

A vehicular disc brake including: a caliper body formed by connecting a pair of action parts, which face each other with a disc rotor sandwiched therebetween and have a cylinder hole for accommodating a piston, with a bridge part having a ceiling opening and straddling an outer periphery of the disc rotor; and an inner friction pad disposed on an inner side of a vehicle body and an outer friction pad disposed on an outer side of the vehicle body with the disc rotor sandwiched therebetween, in which the inner friction pad and the outer friction pad are each formed by attaching a lining to a metal back plate, wherein
the back plate is provided with a heat dissipation piece that is inserted into the ceiling opening.

### [Clause 2]

The vehicular disc brake according to clause 1, wherein
the heat dissipation piece of the inner friction pad is formed in a length such that an outer side surface in a disc radial direction is disposed in the ceiling opening and contracts inward from an outer side surface of the bridge part in the disc radial direction.

### [Clause 3]

The vehicular disc brake according to clause 1 or 2, wherein
the heat dissipation piece of the outer friction pad is formed in a length such that an outer side surface in a disc radial direction projects outward from the ceiling opening in the disc radial direction.

### [Clause 4]

The vehicular disc brake according to any one of clauses 1 to 3, wherein
a plurality of the ceiling openings are formed in the bridge part in a disc circumferential direction, and a plurality of the heat dissipation pieces are formed according to the ceiling openings.

### [Clause 5]

The vehicular disc brake according to any one of clauses 1 to 4, wherein
an outer side surface of the heat dissipation piece in a disc radial direction is formed, in a state in which the inner friction pad and the outer friction pad are assembled to the caliper body, in a shape along a shape of an outer side surface of the bridge part in the disc radial direction.

### [Clause 6]

The vehicular disc brake according to any one of clauses 1 to 5, wherein
the heat dissipation piece is formed with a chamfered part.

### [Clause 7]

The vehicular disc brake according to any one of clauses 1 to 6, wherein
the pair of action parts are formed with a plurality of the cylinder holes in a disc circumferential direction, the bridge part includes a disc inward rotation side bridge part formed on a disc inward rotation side when a vehicle moves forward, a disc outward rotation side bridge part formed on a disc outward rotation side when the vehicle moves forward, and an intermediate bridge part formed on an intermediate portion between the disc inward rotation side bridge part and the disc outward rotation side bridge part, and the ceiling openings are formed between the intermediate bridge part and the disc inward rotation side bridge part, and between the intermediate bridge part and the disc outward rotation side bridge part, and
ventilation holes that open to an outer side surface in a disc radial direction and a disc rotor side surface of at least one of the action parts on an extension line of the intermediate bridge part are formed.

### [Clause 8]

The vehicular disc brake according to clause 7, wherein
a ventilation space is formed among the piston accommodated in each of the attached cylinder holes, the back plate, and the disc rotor side surface of the action part, and the ventilation holes communicate with the ventilation space.

### [Clause 9]

The vehicular disc brake according to clause 7 or 8, wherein
a ventilation groove extending from an inner side end part in the disc radial direction to the ventilation holes is formed on the disc rotor side surface of the action part.

### [Clause 10]

The vehicular disc brake according to any one of clauses 7 to 9, wherein
the ventilation holes are formed at an obtuse angle with respect to the disc rotor side surface from the outer side surface of the action part in the disc radial direction toward the disc rotor side surface.

### [Clause 11]

The vehicular disc brake according to any one of clauses 7 to 10, wherein
each of the ventilation holes is formed in a respective one of the pair of action parts.

### [Clause 12]

The vehicular disc brake according to clause 11, wherein
the ventilation holes formed in the action parts disposed on the inner side of the vehicle body have a larger diameter than the ventilation holes formed in the action parts disposed on the outer side of the vehicle body.

### [Clause 13]

The vehicular disc brake according to any one of clauses 7 to 12, wherein
the caliper body is attached to the vehicle body with an inner side in the disc radial direction facing the front of the vehicle body.

### Reference Sign List

- 1: vehicular disc brake
- 2: disc rotor
- 3: caliper body
- 3a, 3b: action part
- 3c: bridge part
- 3d: disc inward rotation side bridge part
- 3e: disc outward rotation side bridge part
- 3f: intermediate bridge part
- 3g: first ceiling opening
- 3h: second ceiling opening
- 3i: cylinder hole
- 3j: mounting boss part
- 3k: mounting bolt insertion hole
- 3m, 3p, 3r, 3s, 3t: outer side surface in disc radial direction
- 3n, 3q: disc rotor side surface
- 4: inner friction pad
- 4a: lining
- 4b: back plate
- 4c, 4d: heat dissipation piece
- 4e, 4f: outer side surface in disc radial direction
- 4g: chamfered part
- 5: outer friction pad
- 5a: lining
- 5b: back plate
- 5c, 5d: heat dissipation piece
- 5e, 5f: outer side surface in disc radial direction
- 5g: chamfered part
- 6: piston
- 7: hydraulic chamber
- 8: friction pad accommodating part
- 8a: inward rotation side torque receiving surface
- 8b: outward rotation side torque receiving surface
- 9: first ventilation hole
- 9a: first ventilation groove
- 10: friction pad accommodating part
- 10a: inward rotation side torque receiving surface
- 10b: outward rotation side torque receiving surface
- 11: second ventilation hole
- 11a: second ventilation groove

## Claims

1. A vehicular disc brake (1),
including:
- a caliper body (3) formed by connecting a pair of action parts (3a, 3b), which face each other with a disc rotor (2) sandwiched therebetween and which have a cylinder hole (3i) for accommodating a piston (6), with a bridge part (3c) having a ceiling opening (3g, 3h) and straddling an outer periphery of the disc rotor (2); and
- an inner friction pad (4) configured to be disposed on an inner side of a vehicle body and an outer friction pad (5) configured to be disposed on an outer side of the vehicle body with the disc rotor (2) sandwiched therebetween, in which the inner friction pad (4) and the outer friction pad (5) are each formed by attaching a lining (4a, 5a) to a metal back plate (4b, 5b),
wherein the back plate (4b, 5b) is integrally provided with a heat dissipation piece (4c, 4d, 5c, 5d) that is inserted into the ceiling opening (3g, 3h).

2. The vehicular disc brake (1) according to claim 1, wherein the heat dissipation piece (4c, 4d) of the inner friction pad (4) is formed in a length such that an outer side surface in a disc radial direction is disposed in the ceiling opening (3g, 3h) and contracts inwardly from an outer side surface of the bridge part (3c) in the disc radial direction.

3. The vehicular disc brake (1) according to claim 1 or 2, wherein the heat dissipation piece (5c, 5d) of the outer friction pad (5) is formed in a length such that an outer side surface in a disc radial direction projects outwardly from the ceiling opening (3g, 3h) in the disc radial direction.

4. The vehicular disc brake (1) according to any one of the preceding claims, wherein a plurality of the ceiling openings (3g, 3h) is formed in the bridge part (3c) in a disc circumferential direction (A), and a plurality of the heat dissipation pieces (4c, 4d, 5c, 5d) is formed according to the ceiling openings (3g, 3h).

5. The vehicular disc brake (1) according to any one of the preceding claims, wherein an outer side surface of the heat dissipation piece (4c, 4d, 5c, 5d) in a disc radial direction is formed, in a state in which the inner friction pad (4) and the outer friction pad (5) are assembled to the caliper body (3), in a shape along a shape of an outer side surface of the bridge part (3c) in the disc radial direction.

6. The vehicular disc brake (1) according to any one of the preceding claims, wherein the heat dissipation piece (4c, 4d, 5c, 5d) is formed with a chamfered part (4g, 5g).

7. The vehicular disc brake (1) according to any one of the preceding claims, wherein:
- the pair of action parts (3a, 3b) is formed with a plurality of the cylinder holes (3i) in a disc circumferential direction (A),
- the bridge part (3c) includes:
- a disc inward rotation side bridge part (3d) formed on a disc inward rotation side when a vehicle moves forward,
- a disc outward rotation side bridge part (3e) formed on a disc outward rotation side when the vehicle moves forward, and
- an intermediate bridge part (3f) formed on an intermediate portion between the disc inward rotation side bridge part (3d) and the disc outward rotation side bridge part (3e), and
- the ceiling openings (3g, 3h) are formed between the intermediate bridge part (3f) and the disc inward rotation side bridge part (3d), and between the intermediate bridge part (3f) and the disc outward rotation side bridge part (3e), and
- ventilation holes (9, 11) that open to an outer side surface in a disc radial direction and a disc rotor side surface of at least one of the action parts (3a, 3b) on an extension line of the intermediate bridge part (3f) are formed.

8. The vehicular disc brake (1) according to claim 7, wherein a ventilation space (E1, E2) is formed among the piston (6) accommodated in each of the attached cylinder holes (3i), the back plate (4, 5), and the disc rotor side surface of the action part (3a, 3b), and the ventilation holes (9, 11) communicate with the ventilation space (E1, E2).

9. The vehicular disc brake (1) according to claim 7 or 8, wherein a ventilation groove (9a, 11a) extending from an inner side end part in the disc radial direction to the ventilation holes (9, 11) is formed on the disc rotor side surface of the action part (3a, 3b).

10. The vehicular disc brake (1) according to any one of claims 7 to 9, wherein the ventilation holes (9, 11) are formed at an obtuse angle with respect to the disc rotor side surface from the outer side surface of the action part (3a, 3b) in the disc radial direction toward the disc rotor side surface.

11. The vehicular disc brake (1) according to any one of claims 7 to 10, wherein each of the ventilation holes (9, 11) is formed in a respective one of the pair of action parts (3a, 3b).

12. The vehicular disc brake (1) according to claim 11, wherein the ventilation holes (9, 11) formed in the action parts (3a, 3b) is configured to be disposed on the inner side of the vehicle body have a larger diameter than the ventilation holes (9, 11) formed in the action parts (3a, 3b) is configured to be disposed on the outer side of the vehicle body.

13. The vehicular disc brake (1) according to any one of claims 7 to 12, wherein the caliper body (3) is configured to be attached to the vehicle body with an inner side in the disc radial direction facing the front of the vehicle body.
